# EUROPEAN PATENT APPLICATION

(11) **EP 2 184 315 A1**
(43) Date of publication of application: **12.05.2010**
(21) Application number: 09460022.8
(22) Date of filing: 01.06.2009
(51) Int. Cl.: C08J 9/00, C08J 9/224, B29C 44/34, C08K 3/04

(54) **Method of producing polystyrene foam with increased thermal insulation properties**

(30) Priority: 22.09.2008 PL 38612208
(71) Applicant: Walek Boguslaw Izoterm Styropian i Systemy Docieplen, 27420 Bodzechow (PL)
(72) Inventor: Walek, Boguslaw, 27-410 Bodzechów (PL)
(74) Representative: Bartula-Toch, Marta

(57) **Abstract**

Method of producing polystyrene foam with increased thermal insulation properties, characterised by adding to expansion process polystyrene beads with surface coated with graphite powder with grain size about 14 nanometres and surface about 300 m² / gram. Adding graphite powder depends on the intended degree of decreasing the lambda factor and varies from 0.5 to 5 kg per 1 ton of product.

## Description

The subject of the invention is the method of producing polystyrene foam with increased thermal insulation properties, used in the form of sandwich panels for thermal insulation in civil engineering.

From community design no. 000150917- 0004 and from Polish design no. 6783 coloured insulation panels made of polystyrene foam are known, produced with a method known in prior art, consisting in collection of naturally white polystyrene beads and beads coloured artificially with admixtures changing its colour, and next, after mixing, the mixed beads are transferred to the expander, where in temperature of about 105 °C, achieved by employing an air and stem mixture, EPS beads foam, expanding their volume up to about 70 times. The next stage is drying with heated air in the temperature of about 70 °C, and afterwards - seasoning in silos for about 24 hours. Seasoning time depends on pentane content in polystyrene. After seasoning, EPS beads are taken to block moulds, where with the use of steam they undergo blocking process as a result of internal pressure created by their further expansion. Pentane contained in EPS beads glues the form together. Later, forms are degassed and remains of steam are removed with negative pressure.

Polystyrene products obtained as a result of this process keep constant insulation parameters measured with the lambda factor provided for in Polish norms.

The purpose of the invention is to develop a method of producing polystyrene foam meeting the requirements of the norms in force and with a much higher thermal insulation properties of the product by decreasing the lambda factor.

This intention was fulfilled with the method according to the invention, characterised by adding to expansion process polystyrene beads with surface coated with graphite powder with grain size about 14 nanometres and surface about 300 m² / gram.

The amount of added graphite powder varies from 0.5 to 5 kg per 1 ton of product and depends on the intended degree of decreasing the lambda factor.

Applying the method according to the invention allows to improve insulation properties of polystyrene panels by decreasing the lambda factor, which in turn allows to save the material by making the panels thinner, observing the requirements of the relevant standards, and to improve environment protection parameters.

## Claims

1. Method of producing polystyrene foam, consisting in adding polystyrene beads to the expander where they undergo foaming process in steam and air environment in the temperature about 105 °C, and next they are dried in the dryer in the temperature about 70 °C and seasoned for about 24 hours, **characterised by** adding to expansion process polystyrene beads with surface coated with graphite powder with grain size about 14 nanometres and surface about 300 m² / gram.

2. Method according to claim 1, **characterised by** the fact that the amount of added graphite powder depends on the intended degree of decreasing the lambda factor and varies from 0.5 to 5 kg per 1 ton of product.
